# EUROPÄISCHE PATENTSCHRIFT

(11) **EP 3 848 208 B1**
(45) Veröffentlichungstag und Bekanntmachung des Hinweises auf die Patenterteilung: **27.09.2023**
(21) Anmeldenummer: 20217732.5
(22) Anmeldetag: 30.12.2020
(51) Int. Cl.: B60B 7/04, B60B 7/06, B60B 7/20, B60B 19/10, B60B 7/00, B60B 1/06, B60B 3/00

(54) **RAD**
WHEEL
ROUE

(30) Priorität: 02.01.2020 DE 202020000003 U
(43) Veröffentlichungstag der Anmeldung: 14.07.2021
(73) Patentinhaber: Ronal AG, 4624 Härkingen (CH)
(72) Erfinder: Muffatto, Giorgio, 30035 Mirano (IT)
(74) Vertreter: Lichti - Patentanwälte Partnerschaft mbB

(56) Entgegenhaltungen:
- WO-A1-2011/128037
- CN-A- 108 556 561
- DE-A1-102017 009 746
- FR-A1- 2 984 219
- US-A1- 2017 043 616

## Beschreibung

Die Erfindung betrifft ein Rad, insbesondere Leichtmetallrad, mit mindestens zwei Radspeichen, einer Nabe, einem elektrischen Energiegenerator und mindestens einem Aktuator, der elektrisch mit dem Energiegenerator verbunden ist, wobei mindestens eine Abdeckung mindestens einem Zwischenraum zwischen zwei benachbarten Radspeichen zugeordnet ist, wobei die Abdeckung durch den Aktuator in eine Offenstellung und in eine Schließstellung bewegbar ist, wobei die Abdeckung in der Offenstellung den Zwischenraum zumindest teilweise freigibt und wobei die Abdeckung in der Schließstellung den Zwischenraum mindestens teilweise überdeckt.

Aus der EP 1 319 526 A2 ist ein gattungsgemäßes Rad mit mehreren Radspeichen bekannt, zwischen denen Zwischenräume ausgebildet sind. Die Zwischenräume können mittels am Rad angeordneter Abdeckungen zur Kühlung einer Bremse des Rades freigelegt oder zur Verbesserung der aerodynamischen Eigenschaften des Rades überdeckt werden. Die Abdeckungen können gedreht, verschwenkt oder translatorisch bewegt werden. Zur Bewegung der Abdeckungen sind Aktuatoren vorgesehen, die mit einem elektrischen Energiegenerator elektrisch verbunden sind, wobei der Energiegenerator elektrische Energie aus der Drehbewegung des Rades erzeugt. Die Aktuatoren dienen in erster Linie dazu, die Abdeckungen in die Offenstellung zu bewegen. Zur Bewegung der Abdeckungen in die Schließstellung sind Federelemente als Rückstellmittel offenbart, die nach einem Abschalten der Aktuatoren die Abdeckungen wieder in die Schließstellung bewegen.

Dokument FR2984219 offenbart ein weiteres Rad mit durch Aktuatoren drehbaren Abdeckungen.

Bei den bekannten Rädern ist jeder Abdeckung ein Aktuator zugeordnet, so dass die Steuerung der Bewegungen der Abdeckungen konstruktiv aufwändig und daher teuer ist.

Es ist daher die Aufgabe der Erfindung, die Nachteile aus dem Stand der Technik zu beseitigen und ein kostengünstigeres und konstruktiv einfacheres Rad zu entwickeln.

Die Aufgabe wird durch ein Rad mit den Merkmalen von Anspruch 1 gelöst

Die Erfindung basiert auf der grundlegenden Überlegung, dass eine Verschwenkung der mindestens einen Abdeckung um eine radial ausgerichtete Schwenkachse des Rades besonders wenig Platz erfordert, da der Zwischenraum als Bewegungsraum für die Abdeckung genutzt wird. In ähnlicher Weise ist die Drehung des Aktuators um die Radachse ebenfalls platzsparend, wobei die Radachse mit der Erstreckungsrichtung der Radwelle fluchtet. Durch die erfindungsgemäße Kombination der beiden genannten Bewegungen ergibt sich ein konstruktiv wesentlich vereinfachtes und damit günstigeres Rad.

Im Sinne der Erfindung fluchtet die Radachse mit der Radwelle, die das Rad zu Drehbewegungen antreibt und radial zentriert durch das Rad verläuft. Im Sinne eines gedachten zylindrischen Koordinatensystems steht eine radial ausgerichtete Schwenkachse senkrecht zu der Radachse.

Die Erfindung berücksichtigt, dass bei großen Geschwindigkeiten eines Fahrzeugs bei den bekannten Rädern große Strömungswiderstände (gemessen als c_{w}-Wert) insbesondere durch turbulente Luftströmungen zwischen den Radspeichen auftreten, andererseits beim Bremsen des Fahrzeugs durch an den Rädern angeordnete Bremsen eine Luftumströmung zur Kühlung erforderlich ist. Die Zwischenräume der Radspeichen werden durch die mindestens eine Abdeckung in deren Schließstellung derart überdeckt, dass sich kein nennenswerter Strömungswiderstand ausbildet. Die Schließstellung der mindestens einen Abdeckung eignet sich daher insbesondere für große Drehgeschwindigkeiten des Rades. In der Offenstellung der Abdeckung kann Luft aus der äußeren Umgebung in den Zwischenraum gelangen. Der Zwischenraum ist derart freigegeben, dass durch die Luft aus der äußeren Umgebung beispielsweise die Bremse des Rades gekühlt werden kann. Während bei hohen Drehgeschwindigkeiten eines Rades dessen Kontur ohnehin nicht sichtbar ist, wird so bei geringen Geschwindigkeiten und Stillstand das Reifendesign sichtbar.

Der Vorsprung entspricht im Sinne der Erfindung einem mechanischen Aufschlag, der die Position der Abdeckung in der Schließstellung festlegt und der ein Weiterbewegen der Abdeckung über die Schließstellung hinaus verhindert.

Weiterhin kann vorgesehen sein, dass die mindestens eine Abdeckung in der Offenstellung derart verschwenkt ist, dass die Abdeckung aus einer Radialebene des Rades heraus ragt, die von der Abdeckung in Schließstellung aufgespannt wird, die insbesondere senkrecht zur Radachse ausgerichtet ist und die vorzugsweise sämtliche radial ausgerichteten Schwenkachsen enthält.

Der Energiegenerator kann ein in der zylindrischen Nabe des Rades angeordneter elektromagnetischer Energiegenerator sein, mittels dessen insbesondere bei einer Drehbewegung des Rades elektrische Energie vorzugsweise durch Induktion erzeugbar ist. Vorzugsweise ist ein wiederaufladbarer Energiespeicher mit dem elektromagnetischen Generator und mit dem Aktuator verbunden, um den Aktuator auch dann mit Energie zu versorgen, wenn sich das Rad nicht dreht. Höchst vorzugsweise sind der Energiegenerator und/oder der Energiespeicher und/oder der Aktuator in der zylindrischen Nabe des Rades angeordnet, um einen konstruktiv einfachen Aufbau zu erhalten.

Ferner kann eine Antenne zur Datenübertragung vorgesehen sein, mittels der Parameter des Rades durch am Rad angeordnete Sensoren, insbesondere Sensoren zur Messung der Drehgeschwindigkeit des Rades und/oder dessen Beschleunigung und/oder zur Orts- und/oder Zustandsbestimmung der mindestens einen Abdeckung, erfassbar und an eine außerhalb des Rades angeordnete Datenerfassungseinrichtung übermittelbar sind. Vorzugsweise ist die Antenne mit dem Energiegenerator und mit dem Aktuator verbunden, so dass der Aktuator insbesondere durch den Benutzer fernsteuerbar ist. Weiter vorzugsweise ist die mindestens eine Abdeckung in Abhängigkeit von der Drehgeschwindigkeit des Rades insbesondere automatisch in die Offenstellung und in die Schließstellung bewegbar, wobei die Bewegung der Abdeckung auch durch eine manuelle Eingabe auslösbar sein kann.

In einer Ausgestaltung der Erfindung sind mehrere Abdeckungen vorgesehen, die sämtlich derart durch den Aktuator verschwenkbar sind, dass sämtliche Abdeckungen gleichzeitig in die Offen- und/oder Schließstellung bewegbar sind.

Vorzugsweise ist die Abdeckung mit dem Aktuator durch mindestens einen Verbindungsstab verbunden, so dass die Abdeckung besonders einfach durch den Aktuator bewegbar ist. Der Verbindungsstab dient funktionell als Übersetzung zwischen der Drehbewegung des Aktuators um die Radachse und der Verschwenkung der Abdeckung um die radial ausgerichtete Schwenkachse. Die Erfindung kann vorsehen, dass der Verbindungsstab formschlüssig, insbesondere einstückig, mit der Abdeckung verbunden ist.

In einer Weiterbildung der Erfindung ist der Verbindungsstab durch den Aktuator um seine Längsachse rotierbar, um die Abdeckung in die Offenstellung und/oder in die Schließstellung zu verschwenken. Die Längsachse des Verbindungsstabes entspricht der radial ausgerichteten Schwenkachse für die Verschwenkung der Abdeckung.

Der Verbindungsstab kann ein zum Aktuator weisendes Lagerteil aufweisen, das - vorzugsweise reibschlüssig - mit dem Aktuator verbunden ist. Vorzugsweise ist das Lagerteil des Verbindungsstabs kegelstumpfförmig, so dass der Verbindungsstab durch eine Rotation des Aktuators um seine Längsachse rotierbar ist und als mechanische Übersetzung dient.

Weiter vorzugsweise ist jedem Zwischenraum eine Abdeckung zugeordnet, so dass insbesondere in der Schließstellung sämtliche Zwischenräume des Rades durch jeweils eine Abdeckung mindestens teilweise überdeckt sind. Vorzugsweise überdeckt die Abdeckung in ihrer Schließstellung den Zwischenraum vollständig, um den Luftfluss in den Zwischenraum des Rades zu minimieren. Insbesondere sind mehrere Abdeckungen vorgesehen und jede Abdeckung ist um eine radial ausgerichtete Schwenkachse verschwenkbar, wobei sämtliche Schwenkachsen senkrecht zur Radachse ausgerichtet sind. In einer Weiterbildung fluchten mindestens zwei Schwenkachsen miteinander.

Weitere Vorteile und Merkmale der Erfindung ergeben sich aus den Ansprüchen und der nachfolgenden Beschreibung, in der ein Ausführungsbeispiel der Erfindung unter Bezugnahme auf die Zeichnungen im Einzelnen erläutert ist. Dabei zeigen:
- Fig. 1: eine perspektivische Ansicht auf ein erfindungsgemäßes Rad;
- Fig. 2: das Rad der Fig. 1 in vergrößerter Darstellung mit einer Abdeckung in Schließstellung und
- Fig. 3: das Rad der Fig. 2 mit der Abdeckung in Offenstellung.

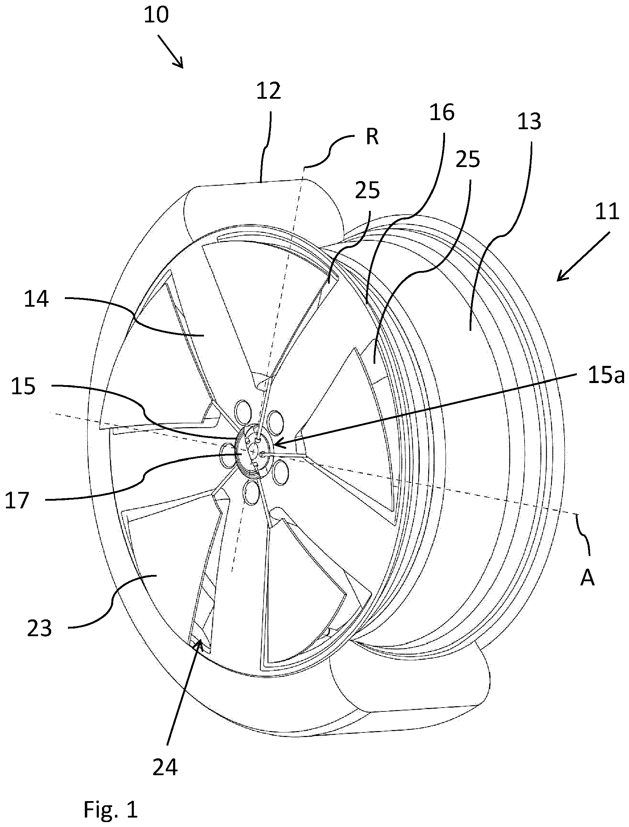

Fig. 1 zeigt ein erfindungsgemäßes Rad 10, das als Kraftfahrzeug-Leichtmetallrad ausgestaltet ist mit einer Felge 11 aus Leichtmetall, wobei ein Reifen 12 in einem Felgenbett 13 des Rades 10 eingespannt ist. Aus Übersichtsgründen ist der Reifen 12 nur auf der linken Seite der Fig. 1 gezeigt, so dass auf deren rechten Seite der Fig. 1 der Blick auf das Felgenbett 13 freigegeben ist. Das Rad 10 besitzt fünf sternförmig angeordnete und radial ausgerichtete Radspeichen 14, die sich von einer radial zentrierten Nabe 15 des Rades 10 zu einem radial äußeren Felgenhorn 16 des Rades 10 erstrecken und in der Regel mit den restlichen Radkomponenten (Felge 11 und Nabe 15) einstückig ausgebildet, vorzugsweise gegossen oder geschmiedet sind. Gemäß der Fig. 1 weist jede Radspeiche 14 beidseitig jeweils einen Vorsprung 25 in Umfangsrichtung auf.

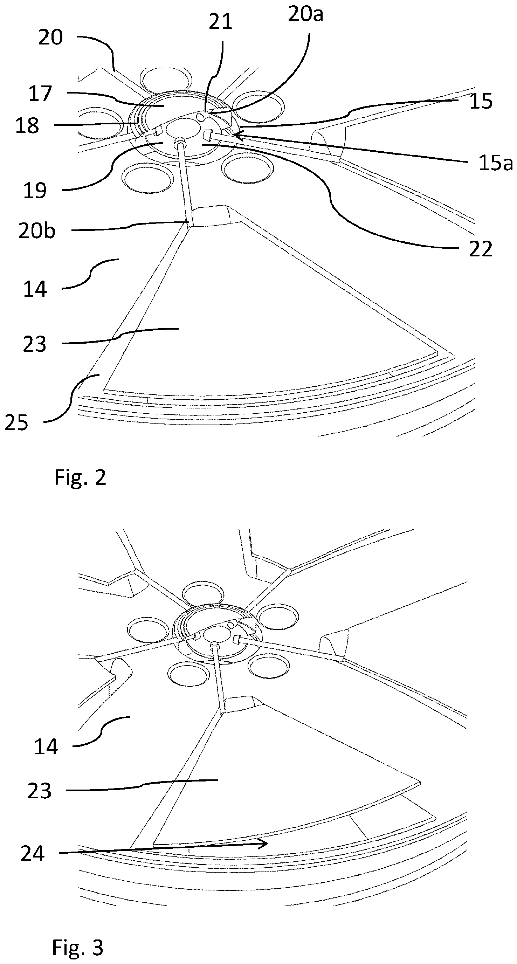

In einem zylindrischen Hohlraum 15a der radial zentrierten Nabe 15 des Rades 10 ist ein nicht dargestellter elektromagnetischer Energiegenerator angeordnet, der bei einer Drehbewegung des Rades 10 um die Radachse A elektrische Energie mittels Induktion erzeugt. Die Radachse A entspricht der Erstreckungsrichtung einer nicht dargestellten Radwelle, die das Rad 10 zur Drehbewegung antreibt. Der Energiegenerator ist elektrisch mit einem Aktuator 17 verbunden, der - schaltbar - im Hohlraum 15a der Nabe 15 angeordnet ist. Der Aktuator 17 ist in Fig. 2 vergrößert dargestellt und auf einem nicht gezeigten Drehlager angeordnet, so dass der Aktuator 17 relativ zu den Radspeichen 14 um die Radachse A drehbar ist. In Fig. 2 ist ein Gehäuse 18 des Aktuators 17 halboffen dargestellt, um den Blick auf ein kegelstumpfförmiges Stellglied 19 innerhalb des Gehäuses 18 freizugeben. Das Stellglied 19 ist, wie auch der Aktuator 17 insgesamt, relativ zu den Radspeichen 14 um die Radachse A drehbar.

Fig. 2 zeigt das Rad 10 der Fig. 1 in vergrößerter Darstellung, wobei fünf Verbindungsstäbe 20 unverlierbar mit dem Aktuator 17 verbunden sind und hierzu in Fig. 2 nicht dargestellte, radiale Durchbrüche in der Mantelfläche des Gehäuses 18 durchgreifen. Die Verbindungsstäbe 20 weisen gemäß der Darstellung in Fig. 1 jeweils mit ihren Längsrichtungen in radial ausgerichtete Schwenkachsen R des Rades 10, wobei sämtliche Schwenkachsen R senkrecht zur Radachse A ausgerichtet sind. Die Verbindungsstäbe 20 sind entlang ihrer Längsrichtung unverschieblich, aber jeweils um ihre Längsrichtungen drehbar. Hierzu weisen die Verbindungsstäbe 20 jeweils an ihren zum Aktuator 17 gerichteten Stirnseiten 20a ein kegelstumpfförmiges Lagerteil 21 auf, das auf einer Mantelfläche 22 des Stellglieds 19 aufliegt und von dessen Drehbewegung um die Radachse A antreibbar ist. Dadurch kann die Drehbewegung des Stellglieds 19 auf die Verbindungsstäbe 20 übertragen werden, die sich daraufhin um die jeweiligen Schwenkachsen R drehen.

An ihren dem Stellglied 19 jeweils abgewandten Stirnseiten 20b sind die Verbindungsstäbe 20 jeweils einstückig mit einer Abdeckung 23 mit kreissektorförmiger Grundfläche verbunden. In der vergrößerten Darstellung der Fig. 2 sind nur zwei Abdeckungen 23 ersichtlich, wobei gemäß Fig. 1 insgesamt fünf Abdeckungen 23 vorgesehen sind, die jeweils in einem Zwischenraum 24 zwischen zwei benachbarten Radspeichen 14 angeordnet sind.

Die Abdeckungen 23 sind in eine in Fig. 2 gezeigte Schließstellung und eine in Fig. 3 gezeigte Offenstellung beweglich. In der Schließstellung der Abdeckungen 23 gemäß Fig. 2 sind diese in einer Radialebene des Rades 10 angeordnet, die von den Abdeckungen 23 in der Schließstellung gemäß Fig. 2 aufgespannt wird, die daher die Schwenkachsen R enthält und die senkrecht zur Radachse A angeordnet ist. Sämtliche Zwischenräume 24 werden von den Abdeckungen 23 überdeckt, wobei die Abdeckungen 23 auf den Vorsprüngen 25 der Radspeichen 14 aufliegen.

Um die Abdeckungen 23 von ihrer Schließstellung der Fig. 2 in die Offenstellung der Fig. 3 zu bewegen, wird das Stellglied 19 des Aktuators 17 durch elektrische Energie aus dem Energiegenerator um die Radachse A gedreht, wobei sich in Folge der reibschlüssigen Verbindung der Verbindungsstäbe 20 mit dem Stellglied 19 sämtliche Verbindungsstäbe 20 gleichzeitig um ihre jeweiligen Längsachsen, die mit den Schwenkachsen R fluchten, drehen. Die mit den Verbindungsstäben 20 verbundenen Abdeckungen 23 folgen den Drehbewegungen der Verbindungsstäbe 20 und werden derart um die der jeweiligen Abdeckung 23 zugeordneten Schwenkachsen R verschwenkt, dass die Abdeckungen 23 in ihrer Offenstellung der Fig. 3 aus der Radialebene des Rades 10 heraus ragen, so dass Luft aus der äußeren Umgebung in die Zwischenräume 24 gelangen kann. Der Übergang von der Schließstellung der Abdeckungen 23 in die Offenstellung erfolgt in umgekehrter Weise.

## Patentansprüche

1. Rad (10), insbesondere Leichtmetallrad, mit mindestens zwei Radspeichen (14) und einer Nabe (15), wobei mindestens eine Abdeckung (23) mindestens einem Zwischenraum (24) zwischen zwei benachbarten Radspeichen (14) zugeordnet ist, wobei die Abdeckung (23) durch mindestens einen Aktuator (17) des Rades (10) in eine Offenstellung und in eine Schließstellung bewegbar ist, wobei die Abdeckung (23) in der Offenstellung den Zwischenraum (24) zumindest teilweise freigibt, wobei die Abdeckung (23) in der Schließstellung den Zwischenraum (24) mindestens teilweise überdeckt, wobei die Abdeckung (23) um eine der Abdeckung (23) zugeordnete radial verlaufende Schwenkachse (R) des Rades (10) verschwenkbar ist, indem der Aktuator (17) um die Radachse (A) und relativ zu den Radspeichen (14) drehbar ist, wobei die radial verlaufende Schwenkachse (R) senkrecht zur Radachse (A) ausgerichtet ist, **dadurch gekennzeichnet, dass** das Rad einen elektrischen Energiegenerator beinhaltet, dass der mindestens eine Aktuator (17) elektrisch mit dem Energiegenerator verbunden ist und dass die Radspeichen (14) mindestens einen Vorsprung (25) in Umfangsrichtung aufweisen, auf dem die Abdeckung (23) in Schließstellung aufliegt.

2. Rad nach Anspruch 1, **dadurch gekennzeichnet, dass** der Energiegenerator ein in der zylindrischen Nabe (15) des Rades (10) angeordneter elektromagnetischer Energiegenerator ist.

3. Rad nach einem der Ansprüche 1 oder 2, **dadurch gekennzeichnet, dass** die mindestens eine Abdeckung (23) durch mindestens einen Verbindungsstab (20) mit dem Aktuator (17) verbunden ist.

4. Rad nach Anspruch 3, **dadurch gekennzeichnet, dass** die Längsachse des Verbindungsstabes (20) der radial verlaufenden Schwenkachse (R) für die Verschwenkung der Abdeckung (23) entspricht.

5. Rad nach Anspruch 3 oder 4, **dadurch gekennzeichnet, dass** der Verbindungsstab (20) ein zum Aktuator (17) weisendes Lagerteil (21) aufweist, das - vorzugsweise reibschlüssig - mit dem Aktuator (17) verbunden ist.

6. Rad nach einem der vorangehenden Ansprüche, **dadurch gekennzeichnet, dass** jedem Zwischenraum (24) eine Abdeckung (23) zugeordnet ist.

7. Rad nach einem der vorangehenden Ansprüche, **dadurch gekennzeichnet, dass** mehrere Abdeckungen (23) vorgesehen sind und dass jede Abdeckung (23) um eine der Abdeckung (23) zugeordneten radial verlaufende Schwenkachse (R) des Rades (10) verschwenkbar ist, wobei sämtliche radial verlaufenden Schwenkachsen (R) senkrecht zur Radachse (A) ausgerichtet sind.

## Claims

1. Wheel (10), in particular a light metal wheel, comprising at least two wheel spokes (14) and a hub (15), at least one cover (23) being associated with at least one intermediate space (24) between two adjacent wheel spokes (14), the cover (23) being movable into an open position and into a closed position by means of at least one actuator (17) of the wheel (10), the cover (23) at least partially uncovering the intermediate space (24) in the open position, the cover (23) at least partially covering the intermediate space (24) in the closed position, and the cover (23) being pivotable about a radially extending pivot axis (R) of the wheel (10) that is associated with the cover (23) by the actuator (17) being rotatable about the wheel axis (A) and relative to the wheel spokes (14), the radially extending pivot axis (R) being oriented perpendicularly to the wheel axis (A), **characterized in that** the wheel has an electrical energy generator, that the at least one actuator (17) is electrically connected to the energy generator, and **in that** the wheel spokes (14) have at least one projection (25) in the circumferential direction, on which the cover (23) rests in the closed position.

2. Wheel according to claim 1, **characterized in that** the energy generator is an electromagnetic energy generator arranged in the cylindrical hub (15) of the wheel (10).

3. Wheel according to either claim 1 or claim 2, **characterized in that** the at least one cover (23) is connected to the actuator (17) by at least one connecting rod (20).

4. Wheel according to claim 3, **characterized in that** the longitudinal axis of the connecting rod (20) corresponds to the radially extending pivot axis (R) for the pivoting of the cover (23).

5. Wheel according to either claim 3 or claim 4, **characterized in that** the connecting rod (20) has a bearing part (21) facing the actuator (17), which bearing part is, preferably frictionally, connected to the actuator (17).

6. Wheel according to any of the preceding claims, **characterized in that** a cover (23) is associated with each intermediate space (24).

7. Wheel according to any of the preceding claims, **characterized in that** a plurality of covers (23) are provided and **in that** each cover (23) is pivotable about a radially extending pivot axis (R) of the wheel (10) that is associated with the cover (23), all of the radially extending pivot axes (R) being oriented perpendicularly to the wheel axis (A).

## Revendications

1. Roue (10), en particulier roue en alliage léger, comportant au moins deux rayons de roue (14) et un moyeu (15), au moins un élément de recouvrement (23) étant associé à au moins un espace intermédiaire (24) entre deux rayons de roue (14) adjacents, l'élément de recouvrement (23) pouvant être déplacé par au moins un actionneur (17) de la roue (10) dans une position ouverte et dans une position fermée, l'élément de recouvrement (23) libérant au moins partiellement l'espace intermédiaire (24) dans la position ouverte, l'élément de recouvrement (23) recouvrant au moins partiellement l'espace intermédiaire (24) dans la position fermée, l'élément de recouvrement (23) pouvant pivoter autour d'un axe de pivotement (R) de la roue (10) s'étendant radialement et associé à l'élément de recouvrement (23) par le fait que l'actionneur (17) peut tourner autour de l'axe de roue (A) et par rapport aux rayons de roue (14), l'axe de pivotement (R) s'étendant radialement étant orienté perpendiculairement à l'axe de roue (A), **caractérisée en ce que** la roue comprend un générateur d'énergie électrique, **en ce que** l'au moins un actionneur (17) est relié électriquement au générateur d'énergie **et en ce que** les rayons de roue (14) présentent au moins une saillie (25) dans la direction circonférentielle, sur laquelle saillie (25) l'élément de recouvrement (23) repose dans la position fermée.

2. Roue selon la revendication 1, **caractérisée en ce que** le générateur d'énergie est un générateur d'énergie électromagnétique disposé dans le moyeu (15) cylindrique de la roue (10).

3. Roue selon l'une des revendications 1 ou 2, **caractérisée en ce que** l'au moins un élément de recouvrement (23) est relié à l'actionneur (17) par au moins une tige de liaison (20).

4. Roue selon la revendication 3, **caractérisée en ce que** l'axe longitudinal de la tige de liaison (20) correspond à l'axe de pivotement (R) s'étendant radialement pour le pivotement de l'élément de recouvrement (23).

5. Roue selon la revendication 3 ou 4, **caractérisée en ce que** la tige de liaison (20) présente une partie de palier (21) orientée vers l'actionneur (17), laquelle partie de palier (21) est reliée - de préférence par friction - à l'actionneur (17).

6. Roue selon l'une des revendications précédentes,
**caractérisée en ce qu'**un élément de recouvrement (23) est associé à chaque espace intermédiaire (24).

7. Roue selon l'une des revendications précédentes,
**caractérisée en ce que** plusieurs éléments de recouvrement (23) sont prévus et **en ce que** chaque élément de recouvrement (23) peut pivoter autour d'un axe de pivotement (R) de la roue (10) s'étendant radialement et associé à l'élément de recouvrement (23), tous les axes de pivotement (R) s'étendant radialement étant orientés perpendiculairement à l'axe de roue (A).
